(19) Europäisches Patentamt European Patent Office Office européen des brevets

(11) **EP 4 512 853 A1**

(12) **EUROPEAN PATENT APPLICATION**
published in accordance with Art. 153(4) EPC

(43) Date of publication:
**26.02.2025 Bulletin 2025/09**

(21) Application number: **23791864.4**

(22) Date of filing: **18.04.2023**

(51) International Patent Classification (IPC):
*C08J 9/06* (2006.01)   *B32B 5/18* (2006.01)
*B32B 27/00* (2006.01)   *C09J 7/26* (2018.01)
*C09J 7/29* (2018.01)   *C09J 7/38* (2018.01)

(52) Cooperative Patent Classification (CPC):
**B32B 5/18; B32B 27/00; C08J 9/06; C09J 7/26;
C09J 7/29; C09J 7/38**

(86) International application number:
**PCT/JP2023/015514**

(87) International publication number:
**WO 2023/204216 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.04.2022 JP 2022068388**

(71) Applicant: SEKISUI CHEMICAL CO., LTD.
**Osaka-shi
Osaka
530-8565 (JP)**

(72) Inventors:
• **UEDA, Yuuta**
 **Hasuda-shi, Saitama 349-0198 (JP)**
• **MATSUKAWA, Hiroki**
 **Hasuda-shi, Saitama 349-0198 (JP)**
• **SATO, Kento**
 **Hasuda-shi, Saitama 349-0198 (JP)**

(74) Representative: **Ter Meer Steinmeister & Partner
Patentanwälte mbB
Nymphenburger Straße 4
80335 München (DE)**

(54) **RESIN FOAM SHEET AND ADHESIVE TAPE**

(57) A resin foamed sheet comprising a first resin layer that is a foamed resin layer, and a second resin layer provided on at least one surface of the first resin layer, the second resin layer being either a foamed resin layer or a resin film layer, wherein at least one surface of the resin foamed sheet has a contact angle of 36 to 95°, and the resin foamed sheet has a 25% compressive strength of 250 kPa or less.

Fig. 1

EP 4 512 853 A1

**Description**

Technical Field

The present invention relates to a resin foamed sheet and a pressure-sensitive adhesive tape comprising the resin foamed sheet.

Background Art

Conventionally, foam sheets are widely used as base materials of pressure-sensitive adhesive tapes. As such foam sheets, polyolefin-based resin foamed sheets are known which are obtained by foaming an expandable polyolefin-based resin sheet comprising a thermally decomposable foaming agent.

Attempts have recently been made to make a resin foamed sheet multilayered to impart various functions. For example, Patent Literature 1 discloses a multilayer foam sheet that includes a non-foam layer on both surfaces of the foam layer to achieve good flexibility and good mechanical strength. Patent Literature 2 discloses a multilayer foam sheet that includes a foam layer constituting a middle layer, and outer layers on both surfaces of the foam layer, each outer layer being composed of a foam layer with an expansion ratio lower than that of the middle layer, to achieve good re-workability, flexibility, and water resistance.

Citation List

Patent Literature

    PTL 1: JP 2021-54961 A
    PTL 2: WO 2020/158886

Summary of Invention

Technical Problem

A foam sheet may sometimes be used as a base material of a pressure-sensitive adhesive tape for fixing a wall hanging device. The pressure-sensitive adhesive tape for fixing a wall hanging device is required to have high shear holding power so as not to peel off from a member such as a wall surface even when a shear load is exerted thereon. The foam sheet used as the base material of the pressure-sensitive adhesive tape for fixing a wall hanging device is also required to have flexibility to ensure adhesion to the wall surface and conformability to the wall surface shape, as well as peelability when removing the pressure-sensitive adhesive tape from the wall surface.

However, a conventional polyolefin-based resin foamed sheet is typically composed of polyethylene resin on the surface, and the polyethylene resin may be difficult to adhere to some types of pressure-sensitive adhesives, for example, silicone-based pressure-sensitive adhesives, making it difficult to improve the shear holding power. On the other hand, the use of acrylic resin or the like in the foamed sheet improves the adhesion to silicone-based pressure-sensitive adhesives, but makes it difficult to achieve a high expansion ratio when producing a foam and to improve flexibility.

It is therefore an object of the present invention to provide a resin foamed sheet that can achieve both improved shear holding power and improved flexibility when used as a tape base material of a pressure-sensitive adhesive tape in which a pressure-sensitive adhesive such as a silicone-based pressure-sensitive adhesive is used.

Solution to Problem

The present inventors have found that the above-mentioned problem can be solved by adjusting both the surface contact angle and the 25% compressive strength of a resin foamed sheet to be in predetermined ranges, thus completing the present invention as set forth below. That is, the present invention is summarized as set forth in [1] to [18] below:

    [1] A resin foamed sheet comprising a first resin layer that is a foamed resin layer, and a second resin layer provided on at least one surface of the first resin layer, the second resin layer being either a foamed resin layer or a resin film layer, wherein at least one surface of the resin foamed sheet has a contact angle of 36 to 95°, and the resin foamed sheet has a 25% compressive strength of 250 kPa or less.
    [2] The resin foamed sheet according to [1] above, wherein the resin foamed sheet has a thickness of 0.1 to 3.0 mm.

[3] The resin foamed sheet according to [1] or [2] above, wherein the resin foamed sheet has an expansion ratio of 1.5 to 20 cm$^3$/g.

[4] The resin foamed sheet according to any one of [1] to [3] above, wherein the resin foamed sheet has a closed cell structure.

[5] The resin foamed sheet according to any one of [1] to [4] above, wherein the resin foamed sheet comprises a middle layer composed of the first resin layer, and an outer layer (a second resin layer) provided on each of both surfaces of the middle layer, the outer layer being composed of either a foamed resin layer or a resin film layer.

[6] The resin foamed sheet according to [5] above, wherein the outer layer has an expansion ratio of 1 to 3 cm$^3$/g, and the middle layer has an expansion ratio of 3 to 20 cm$^3$/g.

[7] The resin foamed sheet according to [5] or [6] above, wherein the middle layer comprises a polyolefin-based resin, and the outer layer comprises at least one selected from the group consisting of a polyolefin-based resin, a modified polyolefin-based resin, and an acrylic resin.

[8] The resin foamed sheet according to any one of [5] to [7] above, wherein both the outer layers are resin film layers.

[9] The resin foamed sheet according to any one of [5] to [8] above, wherein both the outer layers have an oxygen atom content of 3.5% by mass or more.

[10] The resin foamed sheet according to any one of [1] to [9] above, wherein the resin foamed sheet is used as a base material of a pressure-sensitive adhesive tape for fixing a wall hanging device.

[11] The resin foamed sheet according to any one of [1] to [10] above, wherein the resin foamed sheet has a holding time of 5 minutes or more, as measured in the following hanging test:

<Hanging Test>

a wall hanging device having a hook portion is pressure-bonded via a silicone-based pressure-sensitive adhesive double coated tape to the resin foamed sheet attached to a wall surface, under the condition of a load of 1 kg for 5 seconds, and the wall hanging device is thereby attached to the resin foamed sheet; subsequently, a 1.1 kg weight is hung on the hook portion of the wall hanging device and left standing, and the time required for the wall hanging device to peel off from the resin foamed sheet is measured and designated as the holding time.

[12] The resin foamed sheet according to any one of [1] to [11] above, wherein a thickness ratio of each of the second resin layers to the first resin layer (each of the second resin layers/the first resin layer) is 0.001 to 0.5.

[13] The resin foamed sheet according to any one of [1] to [12] above, wherein the resin constituting the first resin layer is a polyolefin-based resin.

[14] The resin foamed sheet according to any one of [1] to [13] above, wherein the resin constituting the second resin layer comprises at least one selected from the group consisting of an acrylic-olefin resin, an ethylene-vinyl acetate copolymer, and a modified polyolefin-based resin.

[15] The resin foamed sheet according to [7] or [14] above, wherein the modified polyolefin-based resin is an acid-modified polyolefin-based resin.

[16] The resin foamed sheet according to [7] or [15] above, wherein the modified polyolefin-based resin is at least one selected from the group consisting of an unsaturated carboxylic acid-modified polyethylene-based resin and an epoxy group-modified polyethylene-based resin.

[17] The resin foamed sheet according to [7], [14], [15], or [16] above, wherein a degree of modification based on the total amount of the second resin layer is 0.02 to 10% by mass.

[18] A pressure-sensitive adhesive tape comprising the resin foamed sheet according to any one of [1] to [17] above and a pressure-sensitive adhesive material on at least one surface of the resin foamed sheet.

Advantageous Effects of Invention

According to the present invention, it is possible to provide a resin foamed sheet that is excellent in both shear holding power and flexibility when used as tape base materials of pressure-sensitive adhesive tapes in which various pressure-sensitive adhesives including silicone-based pressure-sensitive adhesives are used.

Brief Description of Drawings

[Fig. 1] Fig. 1 is a schematic cross-sectional view showing a resin foamed sheet according to one embodiment of the present invention.

[Fig. 2] Fig. 2 is a schematic cross-sectional view showing an exemplary use in which a pressure-sensitive adhesive double coated tape is used for fixing a wall hanging device.

[Fig. 3] Fig. 3 is a schematic cross-sectional view showing the test method for the hanging test.

Description of Embodiments

[Resin Foamed Sheet]

A resin foamed sheet of the present invention has a surface contact angle of 36 to 95° and a 25% compressive strength of 250 kPa or less.

Because of the above-described features, the resin foamed sheet can ensure high adhesion even when used for various pressure-sensitive adhesives including silicone-based pressure-sensitive adhesives, and can have improved shear holding power. Thus, when the resin foamed sheet is used as a base material of a pressure-sensitive adhesive tape for fixing a wall hanging device, and a high shear load is exerted thereon, the resin foamed sheet can be prevented from peeling off from a wall surface or the like. Furthermore, the resin foamed sheet can ensure high flexibility and, for example, can also ensure adhesion to the wall surface and flexibility with respect to the wall surface shape, as well as peelability when removing the pressure-sensitive adhesive tape from the wall surface.

<Contact Angle>

The resin foamed sheet of the present invention has a surface contact angle of 36 to 95°. If the contact angle is more than 95°, wettability to a silicone-based pressure-sensitive adhesive or the like may deteriorate, resulting in poor adhesion to the pressure-sensitive adhesive. Thus, when a high shear load is exerted on the pressure-sensitive adhesive tape having the resin foamed sheet as the base material, problems are likely to occur, such as peeling of the pressure-sensitive adhesive and the resin foamed sheet, which may cause the adherend to peel off with the pressure-sensitive adhesive, or peeling of the resin foamed sheet and the pressure-sensitive adhesive with the pressure-sensitive adhesive remaining on the adherend, which may cause remnants of the pressure-sensitive adhesive tape to fall off. If the contact angle is less than 36°, practical manufacture of the resin foamed sheet will be difficult.

From the foregoing viewpoint, the contact angle is preferably 50° or more, more preferably 60° or more, and still more preferably 80° or more, while the contact angle is preferably 93° or less, and more preferably 91° or less.

As described below, the contact angle can be adjusted appropriately with the type of resin used in the resin foamed sheet; more specifically, the contact angle can be adjusted by appropriately selecting the type of resin used as a second resin layer (outer layer). That is, in the resin foamed sheet, the contact angle of the surface composed of the below-described second resin layer (outer layer) may fall in the range as mentioned above.

In the resin foamed sheet, the contact angle of at least one surface of the sheet may fall in the above-mentioned range, but preferably, the contact angles of both surfaces of the sheet fall in the above-mentioned range. When the contact angles of both sheet surfaces fall in the above-mentioned range, the resin foamed sheet can be suitably used as a base material of a pressure-sensitive adhesive double coated tape. The contact angle is the contact angle with respect to pure water, as described in the Examples.

<25% Compressive Strength>

The resin foamed sheet of the present invention has a 25% compressive strength of 250 kPa or less. If the 25% compressive strength is more than 250 kPa, the flexibility of the resin foamed sheet may be reduced, leading to reduced adhesion to an adherend such as a wall surface and reduced conformability to the wall surface shape, as well as reduced peelability when removing the pressure-sensitive adhesive tape from the adherend such as a wall surface.

In view of further improving the flexibility of the resin foamed sheet, the 25% compressive strength of the resin foamed sheet of the present invention is preferably 200 kPa or less, more preferably 150 kPa or less, and still more preferably 90 kPa or less. On the other hand, in view of imparting a certain mechanical strength to the resin foamed sheet, the 25% compressive strength of the resin foamed sheet is preferably 10 kPa or more, and more preferably 20 kPa or more, although not specifically limited thereto.

<Closed Cell Structure>

The resin foamed sheet of the present invention preferably has a closed cell structure. When the resin foamed sheet has a closed cell structure, the closed cell structure facilitates ensuring flexibility and simultaneously, improving the shear strength to achieve good shear holding power.

As used herein, "has a closed cell structure" means that the cells of the resin foamed sheet are substantially closed cells. The resin foamed sheet may have a closed cell ratio of, for example, 70% or more, preferably 80% or more, more preferably 90% or more, and still more preferably 92% or more. The upper limit of the closed cell ratio is not specifically limited, that is, 100%. The closed cell ratio can be measured using the method as described in the Examples.

<Thickness>

The resin foamed sheet preferably has a thickness of 0.1 to 3.0 mm. Setting the thickness of the resin foamed sheet in the above-mentioned range facilitates imparting good flexibility and good mechanical strength to the resin foamed sheet. Setting the thickness in the above-mentioned range can also ensure a sufficient thickness required in the base material of a pressure-sensitive adhesive tape, particularly the base material of a pressure-sensitive adhesive tape for fixing a wall hanging device, and additionally can prevent an excessive increase in the thickness of the tape base material. From this viewpoint, the resin foamed sheet more preferably has a thickness of 0.3 to 2 mm, and still more preferably has a thickness of 0.5 to 1.6 mm.

<Expansion Ratio>

The resin foamed sheet of the present invention preferably has an expansion ratio of 1.5 to 20 $cm^3$/g. Setting the expansion ratio to 1.5 $cm^3$/g or more facilitates improving the flexibility of the resin foamed sheet and reducing the above-mentioned 25% compressive strength. On the other hand, setting the expansion ratio to 20 $cm^3$/g or less facilitates improving the mechanical strength of the resin foamed sheet and improving the above-mentioned shear holding power, for example. The resin foamed sheet more preferably has an expansion ratio of 5 to 19 $cm^3$/g, and still more preferably has an expansion ratio of 10 to 18 $cm^3$/g.

The expansion ratio is represented by the reciprocal of the apparent density, and the expansion ratio of the resin foamed sheet may be determined by measuring the apparent density of the resin foamed sheet as a whole and finding its reciprocal. The apparent density can be measured in accordance with JIS K7222.

<Holding Time>

The resin foamed sheet of the present invention preferably has a holding time of 5 minutes or more, as measured in the following hanging test. When the holding time is 5 minutes or more, problems such as peeling off are less likely to occur even when the resin foamed sheet of the present invention is used for fixing a wall hanging device.

<Hanging Test>

A wall hanging device having a hook portion is pressure-bonded via a silicone-based pressure-sensitive adhesive double coated tape to the resin foamed sheet attached to a wall surface, under the condition of a load of 1 kg for 5 seconds, and the wall hanging device is thereby attached to the resin foamed sheet; subsequently, a 1.1 kg weight is hung on the hook portion of the wall hanging device and left standing, and the time required for the wall hanging device to peel off from the resin foamed sheet is measured and designated as the holding time.

<Layer Structure of the Resin Foamed Sheet>

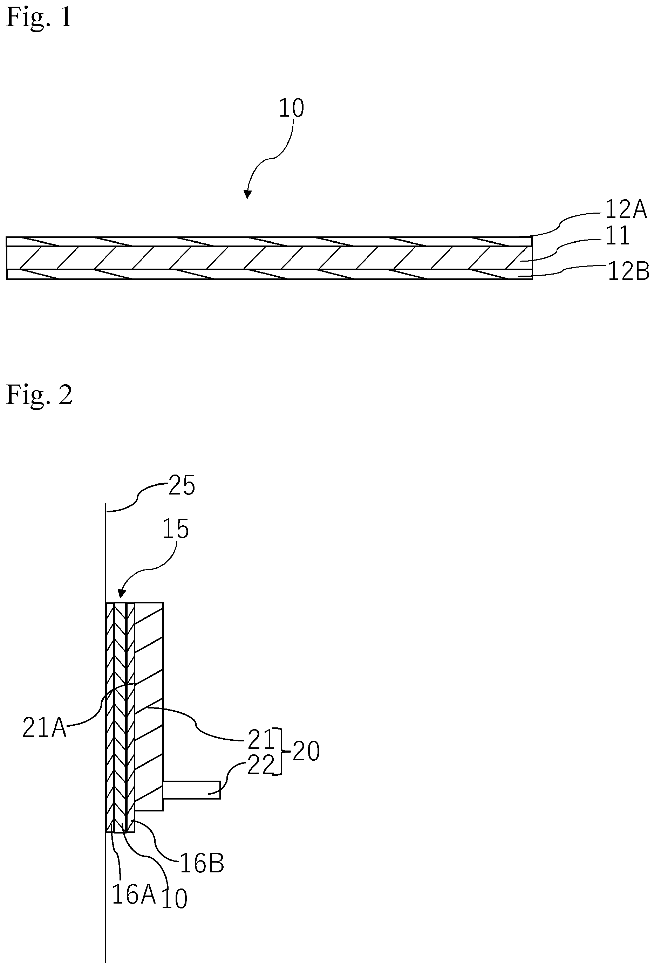

The resin foamed sheet has at least a foamed resin layer made of a foam. In the present invention, the resin foamed sheet comprises a foamed resin layer (hereinafter also referred to as the first resin layer) and an outer layer (hereinafter also referred to as the second resin layer) provided on at least one surface of the foamed resin layer. In particular, the resin foamed sheet is preferably a resin foamed sheet 10 as shown in Fig. 1, which comprises a middle layer (first resin layer) 11 composed of a foamed resin layer and an outer layer (second resin layer) 12A or 12B provided on each of both surfaces of the middle layer 11. Providing the resin foamed sheet 10 with the outer layers 12A and 12B facilitates adjusting the contact angles of both surfaces to be in the desired range. In the resin foamed sheet, the outer layer (second resin layer) may be provided as a layer constituting a surface of the resin foamed sheet.

The outer layer is either a resin film layer or a foamed resin layer. As used herein, the foamed resin layer is a layer composed of a foam, and the resin film layer is a layer composed of a non-foam. Both the outer layers 12A and 12B may be resin film layers, both may be foamed resin layers, or one of them may be a resin film layer and the other be a foamed resin layer. Among these, preferred is the case in which both the outer layers 12A and 12B are resin film layers. When both the outer layers 12A and 12B are resin film layers, the shear holding power is likely to improve, and thus, even when the resin foamed sheet is used as a tape base material for fixing a wall hanging device, problems such as peeling off are less likely to occur.

(Expansion Ratios of the First and Second Resin Layers)

In the resin foamed sheet, the first resin layer (middle layer) preferably has an expansion ratio of 3 to 20 $cm^3$/g. Setting the expansion ratio of the first resin layer to 3 $cm^3$/g or more facilitates improving the flexibility of the resin foamed sheet and reducing the above-mentioned 25% compressive strength. On the other hand, setting the expansion ratio to 20 $cm^3/g$ or less facilitates improving the mechanical strength of the resin foamed sheet. The resin foamed sheet more preferably has an expansion ratio of 6 to 19 $cm^3/g$, and still more preferably has an expansion ratio of 10 to 18 $cm^3/g$.

The expansion ratio of each of the second resin layers (outer layers) is preferably lower than the expansion ratio of the first resin layer (middle layer). Setting the expansion ratio of the second resin layer to be lower than that of the first resin layer facilitates ensuring the mechanical strength of the resin foamed sheet. In view of facilitating ensuring the mechanical strength and the shear strength of the resin foamed sheet, the expansion ratio of the second resin layer is preferably 1 to 3 $cm^3/g$, more preferably 1 to 2 $cm^3/g$, and still more preferably 1 to 1.5 $cm^3/g$.

The expansion ratios of the first resin layer and each of the second resin layers may be determined by measuring the apparent density of each layer and finding its reciprocal. Therefore, the second resin layer may be a non-foam, and in that case also, the second resin layer has an expansion ratio. The non-foam has an expansion ratio of approximately 1 $cm^3/g$.

(Thicknesses of the First and Second Resin Layers)

The first resin layer (middle layer) in the resin foamed sheet preferably has a thickness of 0.05 to 2.9 mm. Setting the thickness of the first resin layer in the above-mentioned range facilitates ensuring flexibility. Setting the thickness in the above-mentioned range can also ensure a sufficient thickness required in the base material of a pressure-sensitive adhesive tape, particularly the base material of a pressure-sensitive adhesive tape for fixing a wall hanging device, and additionally can prevent an excessive increase in the thickness of the tape base material. From this viewpoint, the first resin layer more preferably has a thickness of 0.25 to 1.9 mm, and still more preferably has a thickness of 0.4 to 1.5 mm.

Each of the second resin layers (outer layers) preferably has a thickness of 3 to 300 μm. Setting the thickness of the second resin layer to 3 to 300 μm facilitates ensuring a certain mechanical strength and flexibility and simultaneously, improving the adhesion to various pressure-sensitive adhesives such as silicone-based pressure-sensitive adhesives. From this viewpoint, each of the second resin layers more preferably has a thickness of 5 to 200 μm, still more preferably has a thickness of 10 to 100 μm, and even more preferably has a thickness of 15 to 70 μm.

A thickness ratio of each of the second resin layers (outer layers) to the first resin layer (middle layer) (each of the second resin layers/the first resin layer) is preferably 0.001 to 0.5. Setting the thickness ratio in the above-mentioned range facilitates ensuring the flexibility and the mechanical strength of the resin foamed sheet and simultaneously, achieving good adhesion to various pressure-sensitive adhesives such as silicone-based pressure-sensitive adhesives. The above-mentioned thickness ratio is more preferably 0.005 to 0.4, still more preferably 0.01 to 0.3, and even more preferably 0.015 to 0.15.

(Oxygen Atom Content)

In the resin foamed sheet, the second resin layer (outer layer) preferably has an oxygen atom content of 3.5% by mass or more. Setting the oxygen atom content to 3.5% or more achieves good adhesion to various pressure-sensitive adhesives such as silicone-based pressure-sensitive adhesives to achieve good shear holding power of the pressure-sensitive adhesive tape. In view of achieving good adhesion to silicone-based adhesives, the above-mentioned oxygen atom content is more preferably 4% by mass or more, and more preferably 6% by mass or more. The above-mentioned oxygen atom content is, for example, 15% by mass or less, although not specifically limited thereto.

As described below, the oxygen atom content can be adjusted appropriately with the type of resin used in the resin foamed sheet; preferably, the oxygen atom content can be adjusted by appropriately selecting the type of resin used as the below-described outer layer.

In the resin foamed sheet, the oxygen atom content in at least one of the outer layers may fall in the above-mentioned range, but preferably, the oxygen atom content in both the outer layers falls in the above-mentioned range. When the oxygen atom content in both the outer layers falls in the above-mentioned range, the resin foamed sheet can be suitably used as a base material of a pressure-sensitive adhesive double coated tape.

(Composition of the First Resin Layer)

In the resin foamed sheet of the present invention, the foamed resin layer is made of a foam. The type of the resin constituting the foamed resin layer is not specifically limited, and any known resin used as a foam may be used.

As described above, the first resin layer is composed of a foamed resin layer. The resin constituting the first resin layer (middle layer) is preferably a thermoplastic resin, and more preferably a polyolefin-based resin, from the viewpoints of flexibility and processability. The use of a polyolefin-based resin facilitates ensuring flexibility and simultaneously, improving the shear strength to achieve good shear holding power, for example. The polyolefin-based resin may be a polyolefin resin, such as a polyethylene resin or a polypropylene resin, or may be an olefin-based copolymer resin, such as an ethylene-vinyl acetate copolymer, with a polyethylene resin being preferred among the above, from the viewpoints of flexibility and shear strength.

Examples of the polyethylene resin include polyethylene resins polymerized with polymerization catalysts, such as Ziegler-Natta compounds, metallocene catalysts, and chromium oxide compounds. Preferably, a polyethylene resin polymerized with a metallocene catalyst is used.

(Metallocene Catalyst)

Examples of the metallocene catalyst include compounds such as bis(cyclopentadienyl) metal complexes having a structure in which a transition metal is sandwiched between unsaturated compounds with a $\pi$-electron system. More specifically, examples include compounds in which one or more cyclopentadienyl rings or analogs thereof are present as ligands bound to a tetravalent transition metal, such as titanium, zirconium, nickel, palladium, hafnium, or platinum.

These metallocene catalysts have active sites with uniform properties, with each active site having the same degree of activity. A polymer synthesized using a metallocene catalyst is highly uniform in molecular weight, molecular weight distribution, composition, composition distribution, and the like, such that when a sheet comprising the polymer synthesized using a metallocene catalyst is crosslinked, the crosslinking proceeds uniformly. The uniformly crosslinked sheet is uniformly foamed and thus, is likely to have stable physical properties. Furthermore, the uniformly crosslinked sheet can be uniformly stretched and thus, the foam can have a uniform thickness.

Examples of the ligand include cyclopentadienyl rings and indenyl rings. These cyclic compounds may be substituted with a hydrocarbon group, a substituted hydrocarbon group, or a hydrocarbon-substituted metalloid group. Examples of the hydrocarbon group include a methyl group, an ethyl group, various propyl groups, various butyl groups, various amyl groups, various hexyl groups, a 2-ethylhexyl group, various heptyl groups, various octyl groups, various nonyl groups, various decyl groups, various cetyl groups, and a phenyl group. As used herein, "various" means various isomers including n-, sec-, tert-, and iso-.

Alternatively, an oligomer obtained by polymerizing a cyclic compound may be used as the ligand.

Furthermore, besides the unsaturated compounds with a $\pi$-electron system, monovalent anionic ligands such as chloride and bromide or divalent anionic chelate ligands, hydrocarbons, alkoxides, arylamides, aryloxides, amides, arylamides, phosphides, aryl phosphides, and the like may be used.

Examples of metallocene catalysts containing a tetravalent transition metal and a ligand include cyclopentadienyltitanium tris(dimethylamide), methylcyclopentadienyltitanium tris(dimethylamide), bis(cyclopentadienyl)titanium dichloride, and dimethylsilyltetramethylcyclopentadienyl-t-butylamidozirconium dichloride.

The metallocene catalyst, when used in combination with a specific co-catalyst (auxiliary catalyst), acts as a catalyst for polymerizing various olefins. Specific examples of the co-catalyst include methylaluminoxane (MAO) and boron-based compounds. The ratio of the molar amount of the co-catalyst to be used relative to that of the metallocene catalyst is preferably 10 to 1,000,000-fold, and more preferably 50 to 5,000-fold.

Examples of the polyethylene resin include low-density polyethylene (LDPE: a density of 0.925 g/cm$^3$ or less), medium-density polyethylene (MDPE: a density of more than 0.925 g/cm$^3$ and 0.945 g/cm$^3$ or less), high-density polyethylene (HDPE: a density of more than 0.945 g/cm$^3$), and linear low-density polyethylene (LLDPE), with linear low-density polyethylene being preferred among the above.

The linear low-density polyethylene is more preferably linear low-density polyethylene obtained by copolymerizing ethylene (at, for example, 75% by mass or more, and preferably 90% by mass or more, based on the total monomer content) optionally with a small amount of an $\alpha$-olefin. Specific examples of the $\alpha$-olefin include propylene, 1-butene, 1-pentene, 4-methyl-1-pentene, 1-hexene, 1-heptene, and 1-octene. Among the above, an $\alpha$-olefin containing 4 to 10 carbon atoms is preferred.

From the viewpoint of flexibility, the linear low-density polyethylene preferably has a density of 0.870 to 0.925 g/cm$^3$, more preferably has a density of 0.890 to 0.925 g/cm$^3$, and still more preferably has a density of 0.910 to 0.925 g/cm$^3$. A single polyethylene resin may be used alone, or a plurality of polyethylene resins may be used.

The polyolefin-based resin is preferably used as a main component in the first resin layer (middle layer). Specifically, the polyolefin-based resin content is, for example, 70% by mass or more, preferably 80% by mass or more, and more preferably 90% by mass or more, based on the total resin content in the first resin layer. While the foamed resin layer constituting the first resin layer may be composed of a polyolefin-based resin alone as a resin component, the foamed resin layer may also contain resins other than the polyolefin-based resin as long as they do not interfere with the effects of the present invention.

(Composition of the Second Resin Layer)

The second resin layer (outer layer) is a resin film layer or a foamed resin layer as described above. While the type of resin constituting the second resin layer is not specifically limited, a resin may be selected such that the surface contact angle falls in the above-mentioned range. While the resin used as each of the second resin layers is preferably a thermoplastic resin from the viewpoint of processability, the resin may also be a curable resin, such as thermosetting resin or a photocurable resin.

Examples of the resin used as each of the second resin layers (outer layers) include polyolefin-based resins, modified polyolefin-based resins such as acid-modified polyolefin-based resins, and acrylic resins. These resins may be used alone or in combinations of two or more. The use of these resins as the second resin layer facilitates adjusting the surface contact angle of the resin foamed sheet to be in the predetermined range.

The second resin layer is preferably provided on each of both surfaces of the middle layer as described above, and the resins contained in the plurality of the second resin layers may be the same or different from each other.

An olefin-based copolymer resin, which is a copolymer of an olefin with a monomer other than olefins, such as vinyl acetate or (meth)acrylate, is preferably used as the polyolefin-based resin used as the second resin layer. Examples of the olefin used in the olefin-based copolymer resin include $\alpha$-olefins containing about 2 to 12 carbon atoms, such as ethylene, propylene, butene, and methylpentene-1, with ethylene being preferred. The olefin-based copolymer resin is preferably, for example, an acrylic-olefin resin or an ethylene-vinyl acetate copolymer.

Preferred specific examples of the acrylic-olefin resin include acrylic-ethylene resins, such as ethylene-ethyl acrylate copolymer (EEA), ethylene-methyl acrylate copolymer (EMA), ethylene-butyl acrylate copolymer (EBA), and ethylene-methyl methacrylate copolymer (EMMA).

The use of the above-mentioned olefin-based copolymer resins as the second resin layer facilitates suitably adjusting the surface contact angle of the resin foamed sheet and also adjusting the oxygen atom content to be in the desired range. Among the above, an acrylic-olefin resin is preferred, and particularly an acrylic-ethylene resin is more preferred.

Examples of modified polyolefin-based resins include an acid-modified polyolefin-based resin that is acid-modified with at least one of unsaturated carboxylic acids and anhydrides thereof. Specifically, the acid-modified polyolefin-based resin is obtained by chemically binding an unsaturated carboxylic acid or the like to the polyolefin-based resin, through addition reaction, graft reaction, or the like.

In the acid-modified polyolefin-based resin, examples of the unsaturated carboxylic acid to modify the polyolefin-based resin include acrylic acid, methacrylic acid, maleic acid, fumaric acid, itaconic acid, and anhydrides thereof, with maleic acid or its anhydride being preferred.

The modified polyolefin resin may be other than acid-modified and be a resin that acts as a Bronsted base, without being limited to acid-modified resins that act as Bronsted acids, such as the above-described carboxylic acid-modified resins.

The resin that acts as a Bronsted base is preferably a resin containing epoxy groups. Therefore, the modified polyolefin-based resin is also preferably an epoxy group-modified polyolefin-based resin.

Examples of the polyolefin-based resin include homopolymers or copolymers of $\alpha$-olefins containing about 2 to 12 carbon atoms, such as ethylene, propylene, butene, and methylpentene-1. Among the above, a polyethylene-based resin and a polypropylene-based resin are preferred, with a polyethylene-based resin being particularly preferred. Therefore, the modified polyolefin-based resin is preferably a modified polyethylene-based resin. The acid-modified polyolefin-based resin is preferably an acid-modified polyethylene-based resin. The acid-modified polyolefin-based resin may also contain constituent units derived from components other than the olefin and the unsaturated carboxylic acid or its anhydride, and may also contain constituent units derived from vinyl acetate and various (meth)acrylates.

The modified polyolefin-based resin, such as the acid-modified polyolefin-based resin, may comprise an olefin-derived constituent unit as a main component, and may comprise, for example, 50% by mass or more, preferably 60% by mass or more, still more preferably 70% by mass or more, of the olefin, based on the total monomer content.

Examples of the acid-modified polyolefin-based resin include an acid-modified polyolefin-based resin obtained by graft-copolymerizing at least one of unsaturated carboxylic acids and anhydrides thereof onto the polyolefin-based resin, such as a polyethylene-based resin.

Examples also include a copolymer of an olefin such as ethylene, an unsaturated carboxylic acid or its anhydride such as maleic anhydride, maleic acid, or (meth)acrylic acid, and other components that are optionally used. In this case, the unsaturated carboxylic acid or its anhydride is preferably maleic anhydride.

Examples of the epoxy group-modified polyethylene-based resin also include a copolymer of an olefin such as ethylene, an epoxy group-containing compound such as glycidyl (meth)acrylate, and other components that are optionally used.

Specific preferred examples of the modified polyolefin-based resin include unsaturated carboxylic acid-modified polyethylene-based resins, such as maleic anhydride-modified polyethylene-based resin, maleic acid-modified polyethylene-based resin, and (meth)acrylic acid-modified polyethylene-based resin, and epoxy group-modified polyethylene-based resins. In view of improving the shear holding power, the modified polyolefin-based resin is preferably an unsaturated carboxylic acid-modified polyethylene-based resin, for example. Specifically, maleic anhydride-modified polyethylene-based resin and maleic acid-modified polyethylene-based resin are preferred, and maleic anhydride-modified polyethylene-based resin is particularly preferred.

A degree of modification of the modified polyolefin-based resin (or the degree of acid-modification of the modified polyolefin-based resin) is, for example, 0.1 to 25% by mass, preferably 0.5 to 20% by mass, and more preferably 1 to 15% by mass. As used herein, the degree of modification is represented by the percent by mass of the constituent unit derived from the modifying group-containing monomer, such as an unsaturated carboxylic acid or an epoxy group-containing compound, in the modified polyolefin-based resin.

Examples of the acrylic resin used as the second resin layer include an acrylic polymer obtained by polymerizing a monomer component (a) containing an acrylic monomer component. The monomer component (a) is a monomer component having one addition polymerizable double bond, and is preferably a monomer component having one vinyl group. The monomer component (a) preferably contains an alkyl (meth)acrylate as the acrylic monomer component, although not specifically limited thereto.

As used herein, "(meth)acrylate" refers to an acrylate or a methacrylate, and this also applies to other similar terms.

Examples of the alkyl (meth)acrylate include an alkyl (meth)acrylate having a linear or branched alkyl group, with the alkyl group containing, for example, 1 to 18 carbon atoms, preferably 1 to 14 carbon atoms, more preferably 1 to 10 carbon atoms, or still more preferably 1 to 8 carbon atoms.

Examples of the alkyl (meth)acrylate include methyl (meth)acrylate, ethyl (meth)acrylate, n-propyl (meth) acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, n-hexyl (meth)acrylate, n-heptyl (meth)acrylate, 2-ethylhexyl (meth)acrylate, n-octyl (meth)acrylate, isooctyl (meth)acrylate, n-nonyl (meth)acrylate, n-decyl (meth)acrylate, n-undecyl (meth)acrylate, n-dodecyl (meth)acrylate, n-tridecyl (meth)acrylate, and n-tetradecyl (meth)acrylate.

The alkyl (meth)acrylate content in the monomer component (a) constituting the acrylic polymer is preferably 50% by mass or more, more preferably 60% by mass or more and 100% by mass or less, still more preferably 75% by mass or more and 100% by mass or less, and even more preferably 90% by mass or more and 100% by mass or less. The use of the alkyl (meth)acrylate in amounts not less than these lower limits facilitates imparting, for example, mechanical strength required in the foamed resin layer. Alternatively, all of the monomer component (a) may be an alkyl (meth)acrylate.

The monomer component (a) may contain, in addition to the alkyl (meth)acrylate, monomer components other than alkyl (meth)acrylates. Examples of monomer components other than alkyl (meth)acrylates include a carboxyl group-containing monomer or its anhydride, a hydroxyl group-containing (meth)acrylic monomer, a nitrogen-containing vinyl monomer, and a styrene-based monomer.

Examples of the carboxyl group-containing monomer include carboxylic acids containing an addition polymerizable double bond, such as (meth)acrylic acid, crotonic acid, silicic acid, itaconic acid, maleic acid, fumaric acid, and citraconic acid.

Examples of the hydroxyl group-containing (meth)acrylic monomer include hydroxyl group-containing (meth) acrylates, such as 2-hydroxyethyl (meth)acrylate, 2-hydroxypropyl (meth)acrylate, 4-hydroxybutyl (meth)acrylate, caprolactone-modified (meth)acrylate, polyoxyethylene (meth)acrylate, and polyoxypropylene (meth)acrylate.

Examples of the nitrogen-containing vinyl monomer include acrylamides such as (meth)acrylamide, N-methyl(meth)acrylamide, N,N-dimethyl(meth)acrylamide, N-ethyl(meth)acrylamide, N,N-diethyl(meth)acrylamide, N-propyl(meth)acrylamide, N,N-dipropyl(meth)acrylamide, N-isopropyl(meth)acrylamide, N,N-diisopropyl(meth)acrylamide, N-butyl(meth)acrylamide, and N,N-dibutyl(meth)acrylamide; amino group-containing (meth)acrylic monomers, such as aminoethyl (meth)acrylate and t-butylaminoethyl (meth)acrylate; (meth)acrylonitrile; N-vinyl pyrrolidone; N-vinyl caprolactam; N-vinyl laurolactam; (meth)acryloylmorpholine; and dimethylaminomethyl (meth)acrylate.

Examples of the styrene-based monomer include styrene, α-methylstyrene, o-methylstyrene, and p-methylstyrene.

The monomer components other than alkyl (meth)acrylates may be used alone or in combinations of two or more.

The acrylic polymer may be crosslinked with a crosslinking agent to have a crosslinked structure. When the acrylic polymer is crosslinked with a crosslinking agent, the acrylic polymer may be crosslinked with a crosslinking agent by, for example, further adding a crosslinking agent during polymerization of the monomer component (a), and copolymerizing the monomer component (a) and the crosslinking agent. Alternatively, the acrylic polymer may be crosslinked with a crosslinking agent by adding a crosslinking agent to a partially polymerized product of the monomer component (a), and further polymerizing the mixture.

The crosslinking agent may be, for example, a compound having two or more addition polymerizable double bonds, preferably a compound having two or more vinyl groups, and more preferably a polyfunctional (meth)acrylate having two or more (meth)acryloyl groups. These crosslinking agents are incorporated into the main chains composed of the monomer component (a) to crosslink the main chains to one another to form a network.

Specific examples of the crosslinking agent include hexanediol di(meth)acrylate, polyethylene glycol di(meth) acrylate, polypropylene glycol di(meth)acrylate, ethoxylated bisphenol A di(meth)acrylate, tris(2-hydroxyethyl)isocyanurate triacrylate, ε-caprolactone-modified tris(2-acryloxyethyl)isocyanurate, caprolactone-modified ethoxylated isocyanuric acid triacrylate, ethoxylated trimethylolpropane triacrylate, propoxylated trimethylolpropane triacrylate, propoxylated glycerol triacrylate, neopentyl glycol adipate diacrylate, polyurethane acrylate, epoxy acrylate, polyester acrylate, and liquid hydrogenated 1,2-polybutadiene diacrylate. The crosslinking agents may be used alone or in combinations of two or more.

The amount of the crosslinking agent to be added, per 100 parts by mass of the monomer component (a), is preferably 0.5 parts by mass or more and 10 parts by mass or less, more preferably 1 part by mass or more and 8 parts by mass or less, and still more preferably 2 parts by mass or more and 6 parts by mass or less.

Among the above, the resin used as each of the second resin layers is preferably a resin selected from the group consisting of an olefin-based copolymer resin, a modified polyolefin-based resin, and an acrylic resin, in view of facilitating adjusting the contact angle to be in the desired range. Among the above, when the first resin layer (middle layer) comprises an olefin-based resin, the resin used as each second resin layer is more preferably an olefin-based copolymer resin or an acid-modified polyolefin-based resin, and still more preferably an acid-modified polyolefin-based resin, from the viewpoint of adhesion to the first resin layer.

These resins may be used alone or in combinations of two or more.

The resin selected from the group consisting of an olefin-based copolymer resin, a modified polyolefin-based resin, and an acrylic resin is preferably used as a main component in each second resin layer, and the content of the above-mentioned resin is preferably 50% by mass or more, more preferably 70% by mass or more, and still more preferably 90% by mass or more, based on the total amount of the second resin layer. In each of the second resin layers, the resin selected from these resins may be used in combination with another resin, for example, with a polyolefin-based resin other than the olefin-based copolymer resin and the modified polyolefin-based resin.

When a modified polyolefin-based resin is used in the second resin layer, the modified polyolefin-based resin need not be a main component, and the content may be appropriately adjusted to achieve a certain range of the degree of modification. Specifically, the modified polyolefin-based resin may be incorporated into the second resin layer in an amount such that the degree of modification based on the total amount of the second resin layer is, for example, 0.02 to 10% by mass, preferably 0.05 to 8% by mass, more preferably 0.1 to 6% by mass, and still more preferably 0.2 to 6% by mass. As used herein, the degree of modification based on the total amount of the second resin layer means the proportion (% by mass) of the constituent unit derived from the modifying group-containing monomer, such as an unsaturated carboxylic acid or an epoxy group-containing compound, based on the total amount of the second resin layer. The degree of modification based on the total amount of the second resin layer can be calculated from the amount of each component added, or can also be determined by subjecting the surface of the resin foamed sheet to, for example, XPS measurement.

When a modified polyolefin-based resin is used in the second resin layer, the resin to be used in combination with the modified polyolefin-based resin may be a polyolefin-based resin, for example. The polyolefin-based resin may be a polyolefin resin, such as a polyethylene resin or a polypropylene resin, or may be an olefin-based copolymer resin, such as an ethylene-vinyl acetate copolymer, preferably a polyethylene resin. Details of the polyethylene resin used in the second resin layer are as described with respect to the first resin layer and thus, the description is omitted. The type of polyolefin-based resin to be used in combination with the modified polyolefin-based resin in the second resin layer may be different from the type of polyolefin-based resin as used in the first resin layer, but is preferably the same as in the first resin layer. Therefore, when the resin used in the first resin layer is a polyethylene-based resin, the resin to be used in combination with the modified polyolefin-based resin in the second resin layer is preferably also a polyethylene-based resin. Likewise, when the resin used in the first resin layer is LLDPE, the resin to be used in combination with the modified polyolefin-based resin in the second resin layer is preferably also LLDPE.

When a modified polyolefin-based resin is used in the second resin layer, the modified polyolefin-based resin content in the second resin layer is, for example, 5 to 100% by mass, preferably 10 to 100% by mass, and more preferably 15 to 40% by mass, based on the total amount of the second resin layer.

(Foaming Agent)

The foamed resin layer is preferably obtained by foaming an expandable composition for the foamed resin layer, which comprises the above-mentioned resin and a foaming agent. The foaming agent is preferably a thermally decomposable foaming agent. The expandable composition may also contain various additives to incorporate such additives into the foamed resin layer.

An organic or inorganic foaming agent is usable as the thermally decomposable foaming agent. Examples of the organic foaming agent include azo compounds, such as azodicarbonamide, metal salts of azodicarboxylic acids (such as barium azodicarboxylate), and azobisisobutyronitrile; nitroso compounds, such as N,N'-dinitrosopentamethylenetetramine; hydrazine derivatives, such as hydrazodicarbonamide, 4,4'-oxybis(benzenesulfonylhydrazide), and toluenesulfonylhydrazide; and semicarbazide compounds, such as toluenesulfonylsemicarbazide.

Examples of the inorganic foaming agent include ammonium carbonate, sodium carbonate, ammonium hydrogen carbonate, sodium hydrogen carbonate, ammonium nitrite, sodium borohydride, and anhydrous monosodium citrate.

Among the above, preferred is an azo compound, and more preferred is azodicarbonamide, in view of obtaining fine cells, and in view of economy and safety.

The thermally decomposable foaming agents may be used alone or in combinations of two or more.

The amount of the foaming agent to be added into the expandable composition for the foamed resin layer may be adjusted appropriately according to a desired expansion ratio. For example, the amount of the foaming agent contained in the expandable composition for the foamed resin layer for constituting the first resin layer is preferably 1 to 20 parts by mass, more preferably 3 to 18 parts by mass, and still more preferably 5 to 15 parts by mass, per 100 parts by mass of the resin. The use of the foaming agent in amounts not less than these lower limits improves the flexibility of the resin foamed sheet. On the other hand, the use of the foaming agent in amounts not more than these upper limits can prevent excessive foaming of the first resin layer, leading to, for example, good mechanical strength of the resin foamed sheet.

The amount of the foaming agent contained in the expandable composition for the foamed resin layer for constituting the second resin layer is preferably 0.1 to 10 parts by mass, more preferably 0.5 to 5 parts by mass, and still more preferably 1 to 3 parts by mass, per 100 parts by mass of the resin. The use of the foaming agent in amounts not less than these lower limits can achieve at least a certain level of the expansion ratio of the second resin layer. On the other hand, the use of the foaming agent in amounts not more than these upper limits can prevent excessive foaming of the foam, leading to, for example, good mechanical strength of the resin foamed sheet.

As described above, the second resin layer is preferably a resin film layer (that is, a non-foam) and therefore, the second resin layer is preferably formed using a resin composition not containing a foaming agent.

(Additives)

The resin foamed sheet may contain additives as appropriate, besides the resin components. Examples of such additives include conventional additives that can be used in foams and resin films, for example, antioxidants, colorants, fire retardants, antistatic agents, fillers, ultraviolet absorbers, decomposition temperature regulators, photopolymerization initiators, and crosslinking agents. Furthermore, as described above, the resin foamed sheet preferably has the first resin layer and the second resin layer, and each of the first resin layer and the second resin layer may contain additives as appropriate.

The resin foamed sheet preferably contains an antioxidant among the above. When the resin foamed sheet is composed of a plurality of layers, the antioxidant may be incorporated into each of the layers. For example, when the resin foamed sheet has the first resin layer and the second resin layer, the antioxidant may be incorporated into each of the first resin layer and the second resin layer. Examples of the antioxidant include phenolic antioxidants such as 2,6-di-t-butyl-p-cresol, sulfur-based antioxidants, phosphorus-based antioxidants, and amine-based antioxidants.

The amount of the antioxidant contained in each layer is, for example, 0.01 to 5 parts by mass per 100 parts by mass of the resin contained in each layer.

The expandable composition (that is, the foamed resin layer) may also contain a decomposition temperature regulator. The decomposition temperature regulator is added to reduce the decomposition temperature of the thermally decomposable foaming agent, or increase or control the decomposition rate. Specific examples of such compounds include zinc oxide, zinc stearate, and urea. The decomposition temperature regulator is added into each foamed resin layer in an amount of, for example, 0.01 to 5 parts by mass per 100 parts by mass of the resin.

(Adhesive Layer)

While the second resin layer (outer layer) and the first resin layer (middle layer) in the resin foamed sheet are preferably laminated directly to each other, these layers may be laminated with another layer therebetween. Examples of the other layer include an adhesive layer. A known adhesive or pressure-sensitive adhesive, for example, may be used as the adhesive layer. Alternatively, a pressure-sensitive adhesive double coated tape including pressure-sensitive adhesive layers on both surfaces of a base material may be used.

The adhesive layer may have a thickness that does not significantly affect physical properties such as mechanical strength and flexibility of the resin foamed sheet. Therefore, the thickness of the adhesive layer for bonding the outer layer and the foamed resin layer is preferably smaller than the thickness of the outer layer, preferably not more than one-half the thickness of the outer layer.

<Method for Producing the Resin Foamed Sheet>

The method for producing the resin foamed sheet is not specifically limited. To obtain a multilayer resin foamed sheet, the resin foamed sheet can be produced using a method in which a plurality of resin layers is laminated to obtain a multilayer sheet, and then at least one of the resin layers in the multilayer sheet is foamed (hereinafter also referred to as the "first method").

More specifically, the first method comprises the following steps I and II:

(I) obtaining a multilayer sheet having a layer made of an expandable composition for forming a first resin layer and a layer for forming a second resin layer; and

(II) obtaining a resin foamed sheet by foaming the multilayer sheet.

Each of the steps will be hereinafter described.

(Step (I))

While the method of obtaining the multilayer sheet in step (I) is not specifically limited, this is preferably performed by coextrusion. Specifically, the resin for forming the first resin layer (middle layer), a foaming agent such as a thermally decomposable foaming agent, and an additive that is optionally added are fed into an extruder and melt-kneaded to obtain a resin composition (expandable composition) for forming the first resin layer. Also, the resin for forming the second resin layer (outer layer), and a foaming agent and an additive that are optionally added are fed into another extruder and melt-kneaded to obtain a resin composition for forming the second resin layer. Then, the resin compositions fed from the extruders are combined and extruded into a sheet through a T-die or the like. In this manner, the multilayer sheet can be obtained. Coextrusion may employ either the feed block method or multi-manifold method, preferably the feed block method.

While the multilayer sheet obtained in step (I) may comprise the layer for forming the first resin layer and the layer for forming the second resin layer, the multilayer sheet is preferably a multilayer sheet in which the layers for forming the second resin layers are laminated on both surfaces of the layer for forming the first resin layer. The layer for forming the second resin layer may be a layer made of an expandable composition having a foaming agent, or may be a layer made of a resin composition not having a foaming agent.

In step (I), the multilayer sheet obtained above is preferably crosslinked. The crosslinking method may be to previously add an organic peroxide used as a crosslinking agent, and then crosslink the multilayer sheet obtained in step (I) by heating. However, it is preferred to crosslink the multilayer sheet by irradiation with ionizing radiation. Examples of the ionizing radiation include electron beam and β ray, with electron beam being preferred.

The dose of the ionizing radiation is preferably 1 to 10 Mrad, and more preferably 1.5 to 5 Mrad.

(Step (II))

In step (II), the multilayer sheet obtained in step (I) is subjected to foaming treatment to foam the layer made of the expandable composition. The layer made of the expandable composition may be treated to foam the foaming agent, and when the foaming agent is a thermally decomposable foaming agent, the foaming agent is foamed by heating the multilayer sheet. The heating temperature may be not less than the temperature at which the thermally decomposable foaming agent is decomposed, for example, about 150 to 320°C.

Examples of the method of heating the multilayer sheet include, but are not specifically limited to, heating the multilayer sheet with hot air, with infrared radiation, with a salt bath, or with an oil bath. These methods may be used in combination.

The multilayer sheet may also be, for example, stretched as appropriate, while being foamed or after being foamed.

In step (II), the layer for forming the first resin layer may be foamed; however, when the layer for forming the second resin layer is made of an expandable composition, the second resin layer may also be foamed with the first resin layer.

(Second Method)

The multilayer resin foamed sheet can also be produced using another method. A specific example is a method in which the foam constituting the first resin layer is previously produced, and a resin film or foam (outer layer) is layered and bonded on one or both surfaces of the foam (first resin layer) (also referred to as the "Second Method").

The method of obtaining the foam in the second method may be a method in which the resin for forming the foamed resin layer, a thermally decomposable foaming agent, and an additive that is optionally added are melt-kneaded to obtain an expandable composition for the foamed resin layer, and then the expandable composition is formed into a sheet (expandable composition sheet). While the method of melt-kneading the expandable composition and then forming the composition into a sheet is not specifically limited, this is preferably performed using an extruder.

The obtained expandable composition sheet is preferably further crosslinked before foaming as described below. Crosslinking may be performed using a method in which an organic peroxide is previously added, and then the expandable composition sheet is crosslinked by heating. However, it is preferred to crosslink the expandable composition sheet by irradiation with ionizing radiation. The type and the dose of the ionizing radiation are as described above with respect to the first method.

Next, the expandable composition sheet may be foamed. When the foaming agent is a thermally decomposable foaming agent, the expandable composition sheet is foamed by heating. The heating temperature and the heating method are as described above with respect to the first method. The expandable composition sheet may also be, for example, stretched as appropriate, while being foamed or after being foamed. In this manner, the foamed resin layer (foam) is obtained.

Then, the resin film or foam for constituting the outer layer that has been separately prepared is layered and bonded on the foamed resin layer (foam) to obtain the resin foamed sheet. Specifically, this may be performed by thermocompression bonding, by applying heat and pressure using a press or the like. Alternatively, this may be performed by applying a pressure-sensitive adhesive, an adhesive, or the like, or attaching a pressure-sensitive adhesive double coated tape, to a bonding surface between the foamed resin layer and the outer layer, to achieve lamination with a pressure-sensitive adhesive, an adhesive, a pressure-sensitive adhesive double coated tape, or the like.

(Third Method)

The multilayer resin foamed sheet can also be produced using the following third method. Specifically, the foam constituting the first resin layer may be previously produced, and the resin composition for forming the second resin layer may be applied to one or both surfaces of the foam (first resin layer) to form the second resin layer. The third method is suitable when the second resin layer is formed of a curable resin. For example, when an acrylic resin is used, a resin composition comprising the monomer component (a), a crosslinking agent, and the like, or a partially cured product of the resin composition, for example, may be applied to the first resin layer and then cured, for example, to form the second resin layer.

While the method for obtaining the resin foamed sheet as a multilayer laminated body has been described above, for obtaining a resin foamed sheet composed of only foamed resin layers, the expandable composition sheet as described above with respect to the second method may be obtained, and then the foamed resin layers (foams) may be obtained as in the second method.

Furthermore, while the foregoing description is based on the assumption that cells in the resin foamed sheet of the present invention are formed by the foaming agent, the cells may not necessarily be formed by the foaming agent; instead, for example, hollow particles may be incorporated into the resin foamed sheet to obtain the resin foamed sheet.

[Pressure-Sensitive Adhesive Tape]

The resin foamed sheet of the present invention is preferably used as a base material of a pressure-sensitive adhesive tape. The pressure-sensitive adhesive tape comprises the resin foamed sheet of the present invention and a pressure-sensitive adhesive material on at least one surface of the resin foamed sheet. The pressure-sensitive adhesive tape is capable of adhering to another member via the pressure-sensitive adhesive material. The pressure-sensitive adhesive tape may be a tape including pressure-sensitive adhesive materials on both surfaces of the resin foamed sheet, or a tape including a pressure-sensitive adhesive material on one surface of the resin foamed sheet. However, preferably, the pressure-sensitive adhesive tape is a pressure-sensitive adhesive double coated tape including pressure-sensitive adhesive materials on both surfaces.

The pressure-sensitive adhesive material is a layer with pressure-sensitive adhesive properties, which may comprise at least a pressure-sensitive adhesive layer. The pressure-sensitive adhesive material may be a pressure-sensitive adhesive layer alone laminated on a surface of the resin foamed sheet, or may be a pressure-sensitive adhesive double coated sheet attached to a surface of the resin foamed sheet. Preferably, the pressure-sensitive adhesive material is a pressure-sensitive adhesive layer alone. The pressure-sensitive adhesive double coated sheet comprises a base material and pressure-sensitive adhesive layers provided on both surfaces of the base material. The pressure-sensitive adhesive double coated sheet constituting the pressure-sensitive adhesive material is used to bond one of the pressure-sensitive adhesive layers to the resin foamed sheet, and bond the other layer to another member.

The pressure-sensitive adhesive material may further be laminated with a release sheet such as release paper.

The pressure-sensitive adhesive material preferably has a thickness of 5 to 200 $\mu$m, more preferably has a thickness of 7 to 150 $\mu$m, and still more preferably has a thickness of 10 to 100 $\mu$m.

For example, an acrylic, urethane-based, rubber-based, or silicone-based pressure-sensitive adhesive may be used as the pressure-sensitive adhesive constituting the pressure-sensitive adhesive layer, and a silicone-based pressure-sensitive adhesive is preferred among the above.

In general, when a silicone-based pressure-sensitive adhesive is used, excellent adhesion to a tape base material composed of a resin foamed sheet is difficult to achieve. However, as described above, in the present invention, the resin foamed sheet having the specific contact angle is used, such that excellent adhesion of the tape base material (resin foamed sheet of the present invention) to a silicone-based pressure-sensitive adhesive can be achieved.

When the pressure-sensitive adhesive tape is a pressure-sensitive adhesive double coated tape, one of the pressure-sensitive adhesive materials provided on both surfaces of the tape base material may have a pressure-sensitive adhesive layer formed of a silicone-based pressure-sensitive adhesive. However, preferably, both the pressure-sensitive adhesive materials have a pressure-sensitive adhesive layer formed of a silicone-based pressure-sensitive adhesive.

Furthermore, when a pressure-sensitive adhesive double coated sheet is used as the pressure-sensitive adhesive material, of both the pressure-sensitive adhesive layers in the pressure-sensitive adhesive double coated sheet constituting the pressure-sensitive adhesive material, the pressure-sensitive adhesive layer on the side to be bonded to the resin foamed sheet may be formed of a silicone-based pressure-sensitive adhesive. However, preferably, a silicone-based pressure-sensitive adhesive is preferably used as both the pressure-sensitive adhesive layers.

The resin foamed sheet of the present invention is preferably used as a base material of a pressure-sensitive adhesive tape for fixing a wall hanging device. As used herein, the wall hanging device is a member for hanging various articles. Examples of the wall hanging device include a wall hanging device 20 as shown in Fig. 2, which comprises a base portion 21 and a hanging portion 22 protruding from the base portion 21. The hanging portion 22 may have any shape, such as a hook shape, a bar shape, a hemisphere shape, a cube, a cuboid, or a cone. The base portion 21 is a member to be fixed to a wall surface 25, and may be fixed to the wall surface 25 via a pressure-sensitive adhesive double coated tape 15, as shown in Fig. 2. Therefore, the base portion 21 may have a planar portion 21A to which the pressure-sensitive adhesive double coated tape 15 adheres. The pressure-sensitive adhesive double coated tape 15 comprises a base material 10 of a pressure-sensitive adhesive tape and pressure-sensitive adhesive materials 16A and 16B on both surfaces of the base material 10, and the resin foamed sheet of the present invention may be used as the base material 10 of a pressure-sensitive adhesive tape.

Of course, the resin foamed sheet of the present invention may be used for applications other than fixing a wall hanging device, and may be used as a base material of a pressure-sensitive adhesive tape in any application, or may even be used for applications other than a base material of a pressure-sensitive adhesive tape.

Examples

The present invention will be hereinafter described with reference to examples, although the present invention is not limited thereto. Methods of measuring various physical properties and a method of evaluating a resin foamed sheet are as follows.

<Thicknesses of the Foamed Resin Layer and the Outer Layers>

A cross section of the resin foamed sheet was photographed using a digital microscope (product name VHX-900, manufactured by Keyence Corporation), and the thicknesses of the middle layer (first resin layer) and each of the outer layers (second resin layers) were measured from the photographed image. The sum of the thicknesses of the middle layer and both the outer layers was determined as the total thickness of the resin foamed sheet.

<Apparent Density and Expansion Ratio>

For the resin foamed sheets, the first resin layers (middle layers), and the second resin layers (outer layers) obtained in the examples and comparative examples, apparent density was measured according to JIS K7222, and its reciprocal was determined as the expansion ratio. In Table 1, the expansion ratio of each resin foamed sheet is described as the total expansion ratio.

<Closed Cell Ratio>

A planar square-shaped specimen having a side of 5 cm was cut out from each of the resin foamed sheets of the examples and comparative examples. Then, the thickness of the specimen was measured, and apparent volume V1 of the specimen was calculated, and mass W1 of the specimen was also measured. Next, volume V2 occupied by cells was calculated based on the equation shown below. The density of the specimen is represented by $\rho$ (g/cm$^3$).

$$\text{Volume V2 occupied by cells} = V1 - W1/\rho$$

Subsequently, the specimen was immersed in distilled water at 23°C to a depth of 100 mm from the water surface, and a pressure of 15 kPa was applied to the specimen for 3 minutes. Thereafter, the specimen was taken out of the water, and the water adhering to the surface of the specimen was removed. Then, mass W2 of the specimen was measured, and closed cell ratio F1 was calculated based on the following equation:

$$\text{Closed cell ratio F1 (\%)} = 100 - 100 \times (W2 - W1)/V2$$

<25% Compressive Strength>

The 25% compressive strength of each of the resin foamed sheets of the examples and comparative examples was measured according to JIS K6767.

<Oxygen Atom Content>

Using an energy dispersive X-ray spectrometer for a scanning electron microscope ("JSM-IT100", manufactured by JEOL Ltd.), the element distribution on the surface of the resin foamed sheet was analyzed to measure the oxygen atom content (% by mass).

<Contact Angle>

Using "DM-701" manufactured by KYOWA Co., Ltd., the surface contact angle of the resin foamed sheet was measured according to JIS K6768. 5 mL of pure water (wetting tension: 73 mN/m) was dropped onto the smooth surface, and after it had stabilized, measurement was performed.

<Hanging Test>

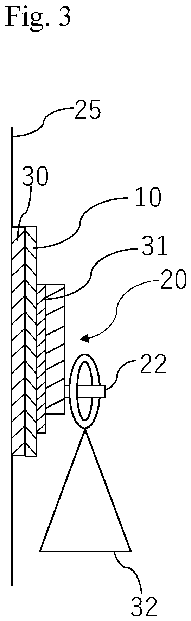

As shown in Fig. 3, the resin foamed sheet 10 (size: 100 mm × 100 mm) was first attached to the wall surface 25 via a pressure-sensitive adhesive tape 30. The pressure-sensitive adhesive tape 30 as used herein had a shear adhesive force sufficiently higher than that of the below-described silicone-based pressure-sensitive adhesive double coated tape 31. Thus, in the hanging test, when the wall hanging device 20 was peeling off, it was removed at the interface between the resin foamed sheet 10 and the silicone-based pressure-sensitive adhesive double coated tape 31. Next, the wall hanging device 20 having a hook portion as the hanging portion 22 was pressure-bonded to the resin foamed sheet 10 via the silicone-based pressure-sensitive adhesive double coated tape 31, under the condition of a load of 1 kg for 5 seconds, and the wall hanging device 20 was thereby attached to the resin foamed sheet 10. Subsequently, a 1.1 kg weight 32 was hung on the hook portion of the wall hanging device 20 and left standing, and the time required for the wall hanging device 20 to peel off from the resin foamed sheet 10 was measured and designated as the holding time. The test was performed at room temperature (23°C).

As the wall hanging device 20 and the silicone-based pressure-sensitive adhesive double coated tape 31, a commercial product sold under the trade name "CMO-30 Command (TM) Hook, Outdoor Use" (manufactured by 3M Company) was used. The silicone-based pressure-sensitive adhesive double coated tape 31 was a tape including pressure-sensitive adhesive layers formed of a silicone-based pressure-sensitive adhesive, on both surfaces of the base material.

<Example 1>

A linear low-density polyethylene resin obtained with a metallocene catalyst (trade name "Kernel KF283", manufactured by Japan Polyethylene Corporation; density: 0.921 g/cm$^3$) was prepared as a polyolefin-based resin for a middle layer, and azodicarbonamide was prepared as a thermally decomposable foaming agent. Additionally, zinc oxide (trade name "OW-212F", manufactured by SAKAI CHEMICAL INDUSTRY CO., LTD.) was prepared as a decomposition temperature regulator, and 2,6-di-t-butyl-p-cresol, which is a phenolic antioxidant, was prepared as an antioxidant. 100 parts by mass of the polyolefin-based resin, 8.0 parts by mass of the thermally decomposable foaming agent, 1 part by mass of the decomposition temperature regulator, and 0.5 parts by mass of the antioxidant were fed into a second extruder and melt-kneaded at 130°C to produce an expandable composition for a middle layer.

Next, an ethylene-vinyl acetate copolymer (product name "Ultrathene (registered trademark) 626", manufactured by Tosoh Corporation) was prepared as a raw material of resin compositions for outer layers. 100 parts by mass of the ethylene-vinyl acetate copolymer and 0.5 parts by mass of the antioxidant were fed into a first extruder and a third extruder and melt-kneaded at 130°C to produce resin compositions for outer layers.

The expandable composition for a middle layer from the second extruder, and the resin compositions for outer layers from the first and third extruders, were coextruded, thereby obtaining an unfoamed multilayer sheet comprising a layer made of the expandable composition for an outer layer and layers made of the resin compositions for outer layers laminated on both surfaces of that layer.

Next, the multilayer sheet was crosslinked by irradiation with 2.5 Mrad of an electron beam at an acceleration voltage of 500 kV and then continuously fed into a foaming oven maintained at 250°C with hot air and an infrared heater to be foamed by heating, thus obtaining a resin foamed sheet with a three-layer structure having an outer layer (resin film layer), a middle layer (foamed resin layer), and an outer layer (resin film layer) in this order.

<Example 2>

A resin foamed sheet was produced as in Example 1, except that the raw material of resin compositions for outer layers was changed to an acid-modified polyolefin-based resin (trade name "BONDINE TX8030", manufactured by Tokyo Zairyo Co., Ltd.; maleic anhydride-modified polyethylene-based resin with a degree of acid-modification of 3% by mass).

<Example 3>

A resin foamed sheet was produced as in Example 1, except that the raw material of resin compositions for outer layers was changed to an acid-modified polyolefin-based resin (trade name "OREVAC 18362", manufactured by Tokyo Zairyo Co., Ltd.; maleic anhydride-modified polyethylene-based resin with a degree of acid-modification of 0.1% by mass).

<Example 4>

A resin foamed sheet was produced as in Example 1, except that the raw material of resin compositions for outer layers was changed to an olefin-based copolymer resin (trade name "Acryft WH206", manufactured by Sumitomo Chemical Co., Ltd.; ethylene-methyl methacrylate copolymer).

<Example 5>

A resin foamed sheet with a three-layer structure having an outer layer (foamed resin layer), a middle layer (foamed resin layer), and an outer layer (foamed resin layer) in this order was obtained as in Example 1, except that 1.0 part by mass of a thermally decomposable foaming agent and 1 part by mass of a decomposition temperature regulator were added to the raw material of resin compositions for outer layers. The resin foamed sheet was thus produced.

<Example 6>

A resin foamed sheet was produced as in Example 1, except that the raw material of resin compositions for outer layers was changed to an 8:2 (mass ratio) mixture of the linear low-density polyethylene resin (trade name "Kernel KF283") and the acid-modified polyolefin-based resin (trade name "BONDINE TX8030"), and that the amount of the foaming agent added was changed as shown in Table 1.

<Example 7>

A resin foamed sheet was produced as in Example 1, except that the raw material of resin compositions for outer layers was changed to a 65:35 (mass ratio) mixture of the linear low-density polyethylene resin (trade name "Kernel KF283") and the acid-modified polyolefin-based resin (trade name "BONDINE TX8030").

<Example 8>

A resin foamed sheet was produced as in Example 1, except that the raw material of resin compositions for outer layers was changed to an 8:2 (mass ratio) mixture of the linear low-density polyethylene resin (trade name "Kernel KF283") and an acid-modified polyolefin-based resin (trade name "LOTADER AX8900", manufactured by Tokyo Zairyo Co., Ltd.; epoxy group-modified polyethylene-based resin with a degree of modification of 8% by mass), and that the amount of the foaming agent added was changed as shown in Table 1.

<Examples 9 and 10>

The same procedure as in Example 8 was performed, except that the amount of the thermally decomposable foaming agent added into the resin layer composition for a middle layer was changed as shown in Table 1.

<Example 11>

A resin foamed sheet was produced as in Example 1, except that the raw material of resin compositions for outer layers was changed to an 8:2 (mass ratio) mixture of the linear low-density polyethylene resin (trade name "Kernel KF283") and an acid-modified polyolefin-based resin (trade name "Primacor 3440", manufactured by S. K. Polymer Co., Ltd.; acrylic acid-modified polyethylene-based resin with a degree of acid-modification of 9% by mass).

<Comparative Example 1>

A resin foamed sheet was produced as in Example 1, except that the raw material of resin compositions for outer layers was changed to the linear low-density polyethylene resin (trade name "Kernel KF283", manufactured by Japan Polyethylene Corporation).

<Comparative Example 2>

A resin foamed sheet was produced as in Example 1, except that the outer layers were not formed.

<Comparative Example 3>

75 parts by mass of methyl acrylate (Nippon Shokubai Co., Ltd.), 25 parts by mass of butyl acrylate (Nippon Shokubai Co., Ltd.), and 0.5 parts by mass of a photopolymerization initiator (trade name "Irgacure 184", manufactured by BASF Japan) were mixed, and the mixture was partially polymerized by polymerization with ultraviolet light, thus preparing a syrup-like curable acrylic resin composition adjusted to a viscosity of 2000 mPa·s. To this resin composition were added 2 parts by mass of a bifunctional crosslinking agent (trade name "NK ESTER APG-400", manufactured by Shin-Nakamura Chemical Co, Ltd.), 1 part by mass of a trifunctional crosslinking agent (trade name "NK ESTER A-9300-3CL", manufactured by Shin-Nakamura Chemical Co, Ltd.), and 2 parts by mass of hollow particles (trade name "Expancel 920DE80d30", manufactured by Japan Fillite Co., Ltd.) and mixed, thus producing a final curable acrylic resin composition. This composition was applied onto release paper at 23°C and irradiated with ultraviolet light to produce a resin foamed sheet with a thickness of 200 $\mu$m. The ultraviolet irradiation was performed under the condition of an irradiance of 4 mW/cm$^2$ and a dose of 720 mJ/cm$^2$.

<Comparative Examples 4 and 5>

The same procedure as in Comparative Example 1 was performed, except that the amount of the thermally decomposable foaming agent added into the resin layer composition for a middle layer was changed as shown in Table 1.

[Table 1]

| Category | Item | Unit | Ex1 Middle | Ex1 Outer | Ex2 Middle | Ex2 Outer | Ex3 Middle | Ex3 Outer | Ex4 Middle | Ex4 Outer | Ex5 Middle | Ex5 Outer | Ex6 Middle | Ex6 Outer | Ex7 Middle | Ex7 Outer | Ex8 Middle | Ex8 Outer | Ex9 Middle | Ex9 Outer | Ex10 Middle | Ex10 Outer | Ex11 Middle | Ex11 Outer | Comp1 Middle | Comp1 Outer | Comp2 (Single) | Comp3 (Single) | Comp4 Middle | Comp4 Outer | Comp5 Middle | Comp5 Outer |
|---|---|---|---|---|---|---|---|---|---|---|---|---|---|---|---|---|---|---|---|---|---|---|---|---|---|---|---|---|---|---|---|---|
| Resin Foamed Sheet Formulation | Polyethylene-based resin (LLDPE) | part(s) by mass | 100 | 0 | 100 | 0 | 100 | 0 | 100 | 0 | 100 | 0 | 100 | 80 | 100 | 65 | 100 | 80 | 100 | 80 | 100 | 80 | 100 | 80 | 100 | 100 | 100 | 0 | 100 | 100 | 100 | 100 |
| | Olefin-based resin EVA626 | | 0 | 100 | 0 | 0 | 0 | 0 | 0 | 0 | 0 | 100 | 0 | 0 | 0 | 0 | 0 | 0 | 0 | 0 | 0 | 0 | 0 | 0 | 0 | 0 | 0 | 0 | 0 | 0 | 0 | 0 |
| | Acid-modified olefin-based resin BONDINE TX8030 | | 0 | 0 | 0 | 100 | 0 | 0 | 0 | 0 | 0 | 0 | 0 | 20 | 0 | 35 | 0 | 0 | 0 | 0 | 0 | 0 | 0 | 0 | 0 | 0 | 0 | 0 | 0 | 0 | 0 | 0 |
| | Acid-modified olefin-based resin 18362 | | 0 | 0 | 0 | 0 | 0 | 100 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | Acid-modified olefin-based resin LOTADER AX8900 | | 0 | 0 | 0 | 0 | 0 | 0 | 0 | 0 | 0 | 0 | 0 | 0 | 0 | 0 | 0 | 20 | 0 | 20 | 0 | 20 | 0 | 0 | 0 | 0 | 0 | 0 | 0 | 0 | 0 | 0 |
| | Acid-modified olefin-based resin Primacor3440 | | 0 | 0 | 0 | 0 | 0 | 0 | 0 | 0 | 0 | 0 | 0 | 0 | 0 | 0 | 0 | 0 | 0 | 0 | 0 | 0 | 0 | 20 | 0 | 0 | 0 | 0 | 0 | 0 | 0 | 0 |
| | Olefin-based resin WH206 | | 0 | 0 | 0 | 0 | 0 | 0 | 0 | 100 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | Thermally decomposable foaming agent | | 8 | 0 | 8 | 0 | 8 | 0 | 8 | 0 | 8 | 1 | 7 | 0 | 8 | 0 | 9 | 0 | 5 | 0 | 3.8 | 0 | 8 | 0 | 8 | 0 | 8 | 0 | 5 | 0 | 4 | 0 |
| | Decomposition temperature regulator | | 1 | 0 | 1 | 0 | 1 | 0 | 1 | 0 | 1 | 1 | 1 | 0 | 1 | 0 | 1 | 0 | 1 | 0 | 1 | 0 | 1 | 0 | 1 | 0 | 1 | 0 | 1 | 0 | 1 | 0 |
| | Antioxidant | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0 | 0.5 | 0.5 | 0.5 | 0.5 |
| | Methyl acrylate | | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 75 | 0 | 0 | 0 | 0 |
| | n-Butyl acrylate | | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 25 | 0 | 0 | 0 | 0 |
| | Photopolymerization initiator | | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0.5 | 0 | 0 | 0 | 0 |
| | Bifunctional crosslinking agent | | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 2 | 0 | 0 | 0 | 0 |
| | Trifunctional crosslinking agent | | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 |
| | Hollow fine particles | | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 2 | 0 | 0 | 0 | 0 |
| Resin Foamed Sheet | Thickness | μm | 1080 | 21 | 1075 | 22 | 1078 | 21 | 1078 | 22 | 1080 | 25 | 1100 | 20 | 1210 | 30 | 813 | 20 | 791 | 20 | 790 | 20 | 1122 | 24 | 1094 | 20 | - | - | 800 | 22 | 760 | 20 |
| | Expansion ratio | cm3/g | 18 | 1 | 18 | 1 | 18 | 1 | 18 | 1 | 18 | 1.2 | 15 | 1 | 18 | 1 | 21 | 1 | 8 | 1 | 5 | 1 | 18 | 1 | 18 | 1 | 15 | 2 | 8 | 1 | 5 | 1 |
| | Total thickness | μm | 1122 | | 1119 | | 1120 | | 1122 | | 1130 | | 1140 | | 1270 | | 853 | | 831 | | 830 | | 1170 | | 1134 | | 1000 | 400 | 844 | | 800 | |
| | Total expansion ratio | cm3/g | 11.0 | | 10.8 | | 11.0 | | 10.8 | | 11.1 | | 10.1 | | 10.0 | | 10.8 | | 6.0 | | 4.2 | | 10.6 | | 16 | | 15 | 2.0 | 5.9 | | 4.2 | |
| | Apparent density | kg/m3 | 0.091 | | 0.093 | | 0.091 | | 0.093 | | 0.090 | | 0.099 | | 0.100 | | 0.092 | | 0.167 | | 0.239 | | 0.094 | | 0.063 | | 0.067 | 0.050 | 0.171 | | 0.240 | |
| | Closed cell ratio | % | 95 | | 96 | | 95 | | 95 | | 95 | | 94 | | 96 | | 97 | | 98 | | 97 | | 95 | | 95 | | 97 | 99 | 96 | | 95 | |
| | 25% Compressive Strength | kPa | 45 | | 47 | | 46 | | 47 | | 47 | | 57 | | 53 | | 55 | | 148 | | 226 | | 62 | | 46 | | 52 | 400 | 135 | | 215 | |
| | Oxygen Atom Content in both surface layers | mass% | 9 | | 7 | | 4 | | 10 | | 5 | | 5 | | 6 | | 6 | | 6 | | 6 | | 11 | | 3 | | - | - | 1 | | 2 | |
| | Contact angle (both surfaces) | degrees | 90 | | 83 | | 91 | | 89 | | 92 | | 89 | | 87 | | 92 | | 91 | | 93 | | 84 | | 99 | | 96 | 63 | 97 | | 97 | |
| Evaluation results | 1.1 kg hanging test holding time | Time | 10 min | | 3 hr ↑ | | 28 min | | 53 min | | 58 min | | 3 hr ↑ | | 3 hr ↑ | | 2 hr 44 min | | 3 hr ↑ | | 3 hr ↑ | | 3 hr ↑ | | 2 min 6 sec | | 1 min 30 sec | 15 min | 1 min 30 sec | | 1 min 12 sec | |

18

* "3 h ↑" in the hanging test indicates that the wall hanging device did not peel off even after passage of 3 hours, and the holding time was 5 minutes or more.

As shown in Table 1 above, in each of the examples, a resin foamed sheet having the first resin layer and the second resin layers and having a contact angle of 36 to 95° and a 25% compressive strength of 250 kPa or less was used, and thus, the shear holding power was improved while achieving high flexibility. Thus, as shown in the hanging test, the wall hanging device was prevented from falling off even when the resin foamed sheet was used for the pressure-sensitive adhesive tape for fixing a wall hanging device, having a silicone-based pressure-sensitive adhesive as the pressure-sensitive adhesive material.

In contrast, in each of Comparative Examples 1, 2, 4 and 5, a resin foamed sheet having a contact angle of more than 95° was used, and thus, the shear holding power was not improved. Thus, the wall hanging device fell off in a short time when the pressure-sensitive adhesive tape for fixing a wall hanging device was used, having a silicone-based pressure-sensitive adhesive as the pressure-sensitive adhesive material. In Comparative Example 3, a resin foamed sheet having a compressive strength of more than 250 kPa was used, and thus, the flexibility of the resin foamed sheet was not ensured.

Reference Signs List

10: resin foamed sheet (base material of a pressure-sensitive adhesive tape)
11: first resin layer (middle layer)
12A, 12B: second resin layer (outer layer)
15: pressure-sensitive adhesive double coated tape
16A, 16B: pressure-sensitive adhesive material
20: wall hanging device
21: base portion
22: hanging portion
25: wall surface
30: pressure-sensitive adhesive tape
31: silicone-based pressure-sensitive adhesive double coated tape
32: weight

**Claims**

1. A resin foamed sheet comprising a first resin layer that is a foamed resin layer, and a second resin layer provided on at least one surface of the first resin layer, the second resin layer being either a foamed resin layer or a resin film layer, at least one surface of the resin foamed sheet having a contact angle of 36 to 95°, and the resin foamed sheet having a 25% compressive strength of 250 kPa or less.

2. The resin foamed sheet according to claim 1, wherein the resin foamed sheet has a thickness of 0.1 to 3.0 mm.

3. The resin foamed sheet according to claim 1, wherein the resin foamed sheet has an expansion ratio of 1.5 to 20 cm$^3$/g.

4. The resin foamed sheet according to claim 1, wherein the resin foamed sheet has a closed cell structure.

5. The resin foamed sheet according to any one of claims 1 to 4, wherein the resin foamed sheet comprises a middle layer composed of the first resin layer, and an outer layer provided on each of both surfaces of the middle layer, the outer layer being composed of either a foamed resin layer or a resin film layer.

6. The resin foamed sheet according to claim 5, wherein the outer layer has an expansion ratio of 1 to 3 cm$^3$/g, and the middle layer has an expansion ratio of 3 to 20 cm$^3$/g.

7. The resin foamed sheet according to claim 5, wherein the middle layer comprises a polyolefin-based resin, and the outer layer comprises at least one selected from the group consisting of a polyolefin-based resin, a modified polyolefin-based resin, and an acrylic resin.

8. The resin foamed sheet according to claim 5, wherein both the outer layers are resin film layers.

9. The resin foamed sheet according to claim 5, wherein both the outer layers have an oxygen atom content of 3.5% by mass or more.

10. The resin foamed sheet according to claim 1, wherein the resin foamed sheet is used as a base material of a pressure-sensitive adhesive tape for fixing a wall hanging device.

11. The resin foamed sheet according to claim 1, wherein the resin foamed sheet has a holding time of 5 minutes or more, as measured in the following hanging test:
<Hanging Test>
a wall hanging device having a hook portion is pressure-bonded via a silicone-based pressure-sensitive adhesive double coated tape to the resin foamed sheet attached to a wall surface, under the condition of a load of 1 kg for 5 seconds, and the wall hanging device is thereby attached to the resin foamed sheet; subsequently, a 1.1 kg weight is hung on the hook portion of the wall hanging device and left standing, and the time required for the wall hanging device to peel off from the resin foamed sheet is measured and designated as the holding time.

12. A pressure-sensitive adhesive tape comprising the resin foamed sheet according to claim 1 and a pressure-sensitive adhesive material on at least one surface of the resin foamed sheet.

Fig. 1

Fig. 2

Fig. 3

## INTERNATIONAL SEARCH REPORT

| International application No. |
| --- |
| **PCT/JP2023/015514** |

**A.     CLASSIFICATION OF SUBJECT MATTER**

*C08J 9/06*(2006.01)i; *B32B 5/18*(2006.01)i; *B32B 27/00*(2006.01)i; *C09J 7/26*(2018.01)i; *C09J 7/29*(2018.01)i;
*C09J 7/38*(2018.01)i
FI:     C08J9/06 CES; B32B5/18; B32B27/00 B; C09J7/26; C09J7/38; C09J7/29

According to International Patent Classification (IPC) or to both national classification and IPC

**B.     FIELDS SEARCHED**

Minimum documentation searched (classification system followed by classification symbols)

C08J9/00 - 9/42, B32B1/00 - 43/00, C09J7/00 - 7/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2019-147918 A (TORAY INDUSTRIES) 05 September 2019 (2019-09-05) | 1-4, 6-12 |
|   | claims, paragraphs [0002], [0017], [0032], [0034], examples | |
| A | | 5 |
| X | JP 2014-188890 A (DAINIPPON PRINTING CO LTD) 06 October 2014 (2014-10-06) | 1-12 |
|   | claims, paragraphs [0036]-[0037], [0042], [0051]-[0052], [0054]-[0056], [0087], examples | |
| A | JP 2017-114125 A (MIRAIAL CO., LTD., NISSEI CHEMICAL CO., LTD.) 29 June 2017 (2017-06-29) | 1-12 |
|   | entire text | |
| A | JP 2014-080023 A (DAINIPPON PRINTING CO LTD) 08 May 2014 (2014-05-08) | 1-12 |
|   | entire text | |
| A | JP 2021-087642 A (OMG CO LTD) 10 June 2021 (2021-06-10) | 1-12 |
|   | entire text | |
| A | JP 59-091178 A (SEKISUI CHEMICAL CO LTD) 25 May 1984 (1984-05-25) | 1-12 |
|   | entire text | |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 June 2023** | **04 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/015514** |

**C. DOCUMENTS CONSIDERED TO BE RELEVANT**

| Category* | Citation of document, with indication, where appropriate, of the relevant passages | Relevant to claim No. |
|---|---|---|
| A | JP 2007-522276 A (E.I. DUPONT DE NEMOURS AND COMPANY) 09 August 2007 (2007-08-09)<br>entire text | 1-12 |
| A | JP 2007-522276 A (PERFORMANCE MATERIALS NA, INC.) 29 October 2020 (2020-10-29)<br>entire text | 1-12 |
| A | JP 2002-029010 A (DAINIPPON PRINTING CO LTD) 29 January 2002 (2002-01-29)<br>entire text | 1-12 |
| A | JP 62-214948 A (IDEMITSU PETROCHEM CO LTD) 21 September 1987 (1987-09-21)<br>entire text | 1-12 |
| A | WO 2017/094723 A1 (SEKISUI CHEMICAL CO LTD) 08 June 2017 (2017-06-08)<br>entire text | 1-12 |
| A | JP 2014-069521 A (DAINIPPON PRINTING CO LTD) 21 April 2014 (2014-04-21)<br>entire text | 1-12 |
| A | US 2021/0317279 A1 (3M INNOVATIVE PROPERTIES COMPANY) 14 October 2021 (2021-10-14)<br>whole document | 1-12 |

Form PCT/ISA/210 (second sheet) (January 2015)

## INTERNATIONAL SEARCH REPORT
### Information on patent family members

International application No.

**PCT/JP2023/015514**

| Patent document cited in search report | | | Publication date (day/month/year) | Patent family member(s) | | | Publication date (day/month/year) |
|---|---|---|---|---|---|---|---|
| JP | 2019-147918 | A | 05 September 2019 | (Family: none) | | | |
| JP | 2014-188890 | A | 06 October 2014 | (Family: none) | | | |
| JP | 2017-114125 | A | 29 June 2017 | WO 2018/116504 entire text | A1 | | |
| JP | 2014-080023 | A | 08 May 2014 | (Family: none) | | | |
| JP | 2021-087642 | A | 10 June 2021 | JP 6764102 entire text | B1 | | |
| JP | 59-091178 | A | 25 May 1984 | (Family: none) | | | |
| JP | 2007-522276 | A | 09 August 2007 | US 2005/0159549 whole document WO 2005/071009 whole document EP 1709116 whole document | A1 A1 A1 | | |
| JP | 2020-530818 | A | 29 October 2020 | US 2021/0146661 whole document WO 2019/000155 whole document EP 3645280 whole document | A1 A1 A1 | | |
| JP | 2002-029010 | A | 29 January 2002 | (Family: none) | | | |
| JP | 62-214948 | A | 21 September 1987 | US 4856656 whole document EP 237977 whole document | A A2 | | |
| WO | 2017/094723 | A1 | 08 June 2017 | US 2018/0355219 whole document EP 3385315 whole document | A1 A1 | | |
| JP | 2014-069521 | A | 21 April 2014 | (Family: none) | | | |
| US | 2021/0317279 | A1 | 14 October 2021 | WO 2020/053826 whole document EP 3849802 whole document | A1 A1 | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021054961 A

- WO 2020158886 A